# EUROPÄISCHE PATENTSCHRIFT

(11) **EP 2 852 246 B1**
(45) Veröffentlichungstag und Bekanntmachung des Hinweises auf die Patenterteilung: **25.01.2017**
(21) Anmeldenummer: 14182675.0
(22) Anmeldetag: 28.08.2014
(51) Int. Cl.: H04W 88/08

(54) **Integriertes Zugangsgerät für ein Heimnetzwerk mit der Möglichkeit zur Ausnutzung eines optimalen Mobilfunkempfangs**
Integrated access device for a home network with the possibility of using an optimal mobile radio reception
Appareil d'accès intégré pour un réseau domestique avec la possibilité d'utilisation d'une réception radio mobile

(30) Priorität: 24.09.2013 DE 102013110532
(43) Veröffentlichungstag der Anmeldung: 25.03.2015
(73) Patentinhaber: Deutsche Telekom AG, 53113 Bonn (DE)
(72) Erfinder: Hellenthal, Hans-Georg, 51105 Köln (DE)
(74) Vertreter: 2K Patentanwälte Blasberg Kewitz & Reichel

(56) Entgegenhaltungen:
- EP-A1- 2 348 783
- EP-A1- 2 584 863
- US-A1- 2007 140 272
- CHEN YAN ET AL: "Integrated Access Device (IAD) Solution Using Intel IXP2350 Network Processor", EMBEDDED SOFTWARE AND SYSTEMS, 2005. SECOND INTERNATIONAL CONFERENCE O N XIAN, CHINA 16-18 DEC. 2005, PISCATAWAY, NJ, USA,IEEE, 16. Dezember 2005 (2005-12-16), Seiten 520-522, XP010903780, DOI: 10.1109/ICESS.2005.65 ISBN: 978-0-7695-2512-9

## Beschreibung

Die Erfindung betrifft ein integriertes Zugangsgerät, umfassend ein Heimnetzwerkmodul, das eine Verbindung zu Endgeräten im lokalen Netzwerk bereitstellt, insbesondere über den Ethernet-Standard und/oder den WLAN-Standard. Weiterhin umfasst das Gerät ein Breitbandnetzwerkmodul, das eine Verbindung zu einem Breitbandnetzwerk eines Telekommunikationsproviders bereitstellt, insbesondere über den DSL, ADSL, SDSL VDSL und/oder Kabel-Standard. Ein weiteres Element ist ein Mobilfunknetzwerkmodul, das eine Verbindung zu einem Mobilfunknetzwerk eines Telekommunikationsproviders bereitstellt, insbesondere nach dem LTE, UMTS, GPRS, EDGE Standard. Weiterhin umfasst das System ein Routermodul, das den Datenverkehr von dem Heimnetzwerk über das Mobilfunknetzwerk oder das Breitbandnetzwerk auf der Basis von Regeln routet.

### Gebiet der Erfindung:

Der Internet-Datenverkehr steigt durch neue Anwendungen kontinuierlich an. In vielen Fällen -insbesondere in ländlichen Bereichen - kann die DSL-Bandbreite von den DSL-Netzbetreibern nicht in der von Kunden gewünschten Bandbreite bereitgestellt werden. Durch neue Mobilfunktechnologien, insbesondere (LTE, LTE Advanced (Long Term Evolution)), können auch via Funk Bandbreiten mit 100 MBit/s und mehr zur Verfügung gestellt werden. Von daher besteht der Kundenwunsch, neben der DSL-Verbindung auch eine Mobilfunkverbindung für Datenübertragungen zu nutzen.

Bereits heute werden IAD's (Integrated Access Devices/Integriertes Zugangsgerät) angeboten, die eine DSL-Verbindung und eine Mobilfunkverbindung mit integrierter HF-Antenne und integriertem HF-Empfangsteil ermöglichen.

Aufgrund der verwendeten Frequenzen für die neuen Mobilfunktechniken ist es zur Erreichung einer guten Mobilfunkverbindung mit einer hohen Datenrate jedoch erforderlich, dass dieser IAD nahe an einem Fenster (near window position) aufgestellt wird. Dabei muss in den Räumlichkeiten ein Fenster ausgewählt werden, das mit der Himmelsrichtung des Mobilfunkmastes des Netzbetreibers korrespondiert. Auch bei richtiger Ausrichtung des IAD kann die Mobilfunk-Empfangsqualität im erdnahen Bereich nicht optimal sein und nur mit einer Positionierung in einer größeren Höhe (1. Etage oder höher) eine gute Empfangsqualität erreicht werden. Der IAD kann aber in vielen Fällen nicht optimal positioniert werden, da an Stellen mit optimaler Mobilfunkversorgung keine Anschlussmöglichkeit des Routers mit der Anschlussleitung des DSL-Anschlusses besteht. Technische Lösungen, wie eine Verlegung der Anschlussdose in den Räumlichkeiten oder die Zwischenschaltung einer Verlängerungsschnur zwischen IAD und Anschlussdose, werden von den Interessenten kaum akzeptiert. Auch die Verlegung von Antennen-Coax-Kabeln zur Anschließung einer externen Zusatzantenne zur Verbesserung des Mobilfunkempfangs ist nicht gewünscht. Der Stand der Technik macht es daher zurzeit nur bedingt möglich, neben einer DSL-Verbindung auch eine Mobilfunk-Datenverbindung für räumliche Internetanwendungen zu nutzen.

Die EP 2348 783 A1 offenbart eine Vorrichtung bei dem ein DSL-Anschluss und ein LTE Anschluss lokal über eine Einheit im Haus zusammengeführt werden, so dass der Benutzer einen Zugang ins Internet über den LTE Anschluss oder den DSL Anschluss besitzt.

### Überblick über die Erfindung

Aufgabe der vorliegenden Erfindung ist die Lösung der oben genannten Probleme. Gelöst wird die Aufgabe mit den Merkmalen der unabhängigen Ansprüche. Die Unteransprüche beschreiben Ausführungsformen.

Die Erfindung umfasst ein integriertes Zugangsgerät (IAD) gemäss den Merkmalen von Anspruch 1. Weitere Ausbildungen des IAD sind in den abhängigen Ansprüchen angegeben.

Das Zugangsgerät entspricht im Wesentlichen den Aufbau eines DSL-Routers, der modular aufgebaut ist, wobei die eigenständigen Module über Netzwerke miteinander verbunden sind. Die Zusammensetzung bzw. die Konfiguration der Module kann dabei unterschiedlich sein.

Die Erfindung umfasst ein Heimnetzwerkmodul, das eine Verbindung zu Endgeräten im lokalen Netzwerk bereitstellt, insbesondere über den Ethernet-Standard (IEEE-802.3, z.B. 100Mbit -10Gbit etc.) und/oder den WLAN-Standard (IEEE-802.11). Das Heimnetzwerkmodul weist hierbei entsprechende Schnittstellen auf. Entsprechende Chip-Sätze sind hierfür im Modul integriert. Das Heimnetzwerk hat die Funktion Geräte in der unmittelbaren Umgebung anzubinden.

Eine weitere Komponente ist ein Breitbandnetzwerkmodul, das eine Verbindung zu einem Breitbandnetzwerk eines Telekommunikationsproviders bereitstellt, insbesondere über den DSL (Digital Subscriber Line), ADSL (asynchron Digital subscriber line), SDSL (symmetric digitial subscriber line) VDSL (Very High Speed Digital Subscriber Line) und/oder Kabel-Standard (breitbandige Coax-Kabel-Verbindung mit Kabelverbindung). Optische Kabelverbindungen sind ebenfalls denkbar. Der DSL Standard dient zur Kommunikation zwischen DSL-Modem und DSLAM, um in der Regel einen Breitband-Internetzugang über einen Internet-Zugangsserver zur Verfügung zu stellen. Dabei handelt DSL die Verbindungsparameter wie Frequenz und Downstream- sowie Upstream-Übertragungsrate aus. Die tatsächliche Internet-Übertragungsrate hängt allerdings vom Internet-Zugangsserver ab.

Die eigentliche Verbindung wird über beliebige Protokolle der höheren Schichten des OSI-Modells hergestellt. Als Sicherungsschicht ist Ethernet oder ATM, als Vermittlungsschicht IP üblich. Über diese Verbindung wird der Internet-Zugangsserver des Providers (BRAS) erreicht, der einen Internetzugang über authentifizierte Verbindungen (zum Beispiel mittels PPPoE) ermöglicht. In der Regel weist das Breitbandnetzwerkmodul ein eigenes Modem auf oder greift auf ein externes Modem zu.

Ein weiteres Element der Erfindung ist ein Mobilfunknetzwerkmodul, das eine Verbindung zu einem Mobilfunknetzwerk eines Telekommunikationsproviders bereitstellt, insbesondere nach dem LTE (Long Term Evolution), UMTS (Universal Mobile Telecommunications System), GSM, GPRS, EDGE, WiMax Standard. Hierbei ist zu beachten, dass es sich um Netzwerkstandards handelt, die weitergehende Entfernungen erlauben als lokale Netzwerke, wie WLAN, Bluetooth etc. Es handelt sich also um Mobilfunknetze, mit einer Vielzahl von Basisstationen, zwischen denen ein Hand-Over erfolgen kann. Das Mobilfunknetzwerkmodul weist somit keine Überschneidungen zum Heimnetzwerkmodul auf. Vielmehr stellt das Mobilfunknetzwerkmodul, genauso wie das Breitbandnetzwerkmodul, einen Zugang zum Internet bereit für ein Heimnetzwerk. Es handelt sich somit um alternative Netzwerkmodule, die parallel oder abwechselnd genutzt werden können, um Daten aus dem Internet zu erlangen, bzw. um diese in das Internet zu senden.

Ein weiteres Modul ist ein Routermodul, das den Datenverkehr von dem Heimnetzwerk über das Mobilfunknetzwerk oder das Breitbandnetzwerk auf der Basis von Regeln routet. In der Regel erfolgt das Routing auf der Basis von Level 3 oder Level 2 Paketen, nach dem OSI-Netzwerk-Model. Das Routermodul kann Regeln aufweisen, die auf der Basis der Auslastung die Datenpakete über das Breitbandnetzwerkmodul oder das Mobilfunknetzwerkmodul routet.

Falls ein Netzwerk überlastet ist bzw. schlechte Antwortzeiten aufweist, so kann das andere Netzwerk hinzu geschaltet werden. Auch ist ein Round-Robin-Ansatz denkbar, bei dem die Daten wechselnd auf das eine oder das andere Modul verteilt werden. Auch kann eine Entscheidung auf der Basis der Protokolle erfolgen. Es ist denkbar, dass es Regeln gibt, die die Daten auf der Basis einer oder mehrerer der Schichten des OSI-Modells betrachtet, um ein Routing zu entscheiden. Sollte zum Beispiel die Breitbandnetzwerkverbindung überlastet sein, so wird dann das Mobilfunknetzwerk hinzu geschaltet. Auch ist es denkbar, dass Video oder Audio-Streaming aufgrund der großen Datenmengen über das Breitbandnetzwerk übertragen werden, wobei kurze Anfragen wie z.B. http-Requests, Mail-Downloads (smpt, imap etc.) über das Mobilfunknetzwerk übertragen werden. Eine Vielzahl von Regeln ist denkbar, die individuell erstellbar sind und vorzugsweise über ein Web-Interface verwaltet werden.

Ferner ist zu beachten, dass das Mobilfunknetzwerkmodul und das Breitbandnetzwerkmodul räumlich getrennt in eigenständigen Gehäusen angeordnet sind, und über ein lokales Netzwerk miteinander verbunden sind. Die Module sind somit eine eigenständige Einheit, die mehrere Meter getrennt voneinander aufgestellt werden können. Somit kann erreicht werden, dass das Breitbandnetzwerkmodul z.B. im Keller angeordnet ist und das Mobilfunknetzwerkmodul in einem oberen Stockwerk. Beide Module sind dann intern durch ein lokales Netzwerk verbunden. Bei diesem Netzwerk kann es sich auch um ein Kabel oder ein kabelloses Netzwerk handeln, wobei jedoch die Weiterleitung der Daten für ein Endgerät im Netzwerk transparent erfolgt. Die Daten könnten z.B. getunnelt werden, das heißt die Daten werden in andere Pakete eingepackt. Auch kann eine Address-Translation vorgenommen werden, bei dem die Absender Adresse ersetzt wird. Eine Reihe von Techniken sind hier denkbar. Auch können die beiden Module ein eigenes privates Netzwerk z.B. auf der Basis vom IP-Protokoll bilden. Um diesen Ansatz zu erreichen, weisen die beiden Module eine zusätzliche, logische oder physikalische Netzwerkschnittstelle auf, über die die Verbindung aufgebaut wird.

Es ist jedoch zu beachten, dass das Routermodul so ausgebildet ist, dass das Mobilfunknetzwerkmodul und das Breitbandnetzwerkmodul für ein Endgerät im Heimnetzwerk als eine logische Einheit dargestellt werden. D.h. für das Endgerät ist nicht ersichtlich über welches Netzwerk (Breitband oder Mobilfunknetzwerk) die Daten vom Router geroutet werden. Für das Endgerät ist lediglich ein Gateway ersichtlich, das über eine logische Adresse in der Regel IP-Adresse angesprochen wird, wenn Daten aus dem Netzwerk heraus gesendet werden sollen.

So sind in einer bevorzugten Ausführungsform sowohl das Mobilfunknetzwerkmodul als auch das Breitbandnetzwerkmodul über eine einzige Netzwerkadresse adressierbar, und das Routermodul leitet auf der Basis von Regeln die Daten über das Mobilfunknetzwerkmodul und/oder Breitbandnetzwerkmodul in die entsprechenden Netze weiter, so dass das Endgerät im Heimnetzwerk lediglich ein Gateway adressiert, wenn Daten aus dem Heimnetzwerk in das Internet versendet werden sollen. Sobald der Router die Daten vom Endgerät empfängt, überprüft es die Regeln und entscheidet dann eine Weitergabe an das Breitbandnetzwerkmodul oder das Mobilfunknetzwerkmodul über das lokale Netzwerk.

Die Adressierung erfolgt in der Regel unter Verwendung von IP-Adressen, wobei das integrierte Zugangsgerät durch eine IP-Adresse als IP-Gateway adressierbar ist. In der Regel wird diese über DHCP übertragen.

Das lokale Netzwerk kann als Powerlan, Ethernet, WLAN und/oder Bluetooth ausgebildet sein.

In einer weiteren Ausführungsform können das Mobilfunknetzwerkmodul und das Breitbandnetzwerkmodul eigenständige Stromversorgungen aufweisen, vorzugsweise auch Power over Ethernet bereitstellen oder für die Stromversorgung nutzen.

Durch Power over Ethernet kann ein Modul dem anderen Strom über das Kabel bereitstellen, über das auch die Daten übertragen werden. Es ist zu beachten, dass das Routermodul innerhalb des Gehäuses des Breitbandnetzwerkmoduls oder des Mobilfunknetzwerkmoduls angeordnet ist. Auch kann es völlig eigenständig sein und mit beiden anderen Modulen über das lokale Netzwerk verbunden sein.

In einer möglichen Ausführungsform sind das Routermodul und das Heimnetzwerkmodul (z.B. ein Ethernet Anschluss oder Ethernet Switch) zusammen im Gehäuse des Breitbandnetzwerkmoduls oder im Gehäuse des Mobilfunknetzwerkmoduls angeordnet.

In einer weiteren Ausführungsform weist das Breitbandnetzwerkmodul und/oder Mobilfunknetzwerkmodul einen IP-Paket-Konverter auf, um die IP-Pakete aus dem Heimnetzwerk für das Mobilfunknetzwerk und/oder Breitbanknetzwerk zu konvertieren. Ein solches Modul kann z.B. ein PPPoE sein, und kann mit einem entsprechenden Modem ausgebildet sein.

In einer weiteren Ausführungsform weist das Mobilfunknetzwerkmodul eine HF-Antenne und ein integriertes HF-Empfangs-/Sendeteil auf, wobei die HF-Antenne integriert ist oder über eine Schnittstelle für eine externe Antenne angesprochen wird. Diese Komponenten dienen zur Übertragung ins Mobilfunknetzwerk. Ferner können noch Baseband-Prozessoren verbaut sein, um die Integration zu ermöglichen. In noch einer Ausführungsform sind Schnittstellen für Telefonie, insbesondere ISDN und/oder Analoge Schnittstellen für Fax gegeben. Über diese Schnittstellen kann, entweder über das PSTN telefoniert werden, oder über auch per VOIP. Die Analoge Schnittstelle kann ebenfalls zum Anschluss eines Faxes dienen. Diese Schnittstellen sind entweder in einem der genannten Module oder in einem weiteren eigenständigen Modul angeordnet, das dann wiederum über das lokale Netzwerk mit den anderen Modulen verbunden wird, um eine logische Einheit zu bilden. Ferner sind USB-Schnittstellen für die Verbindung mit einem PC oder zum Anschluss von Speichermedien denkbar. Über diese Schnittstelle kann eine Konfiguration der Module erfolgen, oder der Anschluss von Zusatzgeräten.

In einer weiteren Ausführungsform umfasst das Mobilfunknetzwerkmodul einen SIM-Kartenleser, ein Modem C und/oder eine Steuerungseinheit. Der Leser dient zur Aufnahme einer SIM-Karte. Die PIN kann auf dem Modul hinterlegt werden, wobei die Steuerungseinheit die PIN-Eingabe beim Starten übernimmt. Ferner hat die Steuerungseinheit die Aufgabe die Daten vom und zum Routermodul zu empfangen/senden. Das Modem ggfs. mit dem Basebandprozessor übernimmt die Umwandlung der Daten von der Steuerungseinheit, um diese dann über das Mobilfunknetzwerk zu versenden bzw. zu empfangen.

In einer weiteren Ausführungsform umfasst das Mobilfunknetzwerkmodul optisch Anzeigeeinrichtungen zur Anzeige der Mobilfunknetzwerk-Feldstärke. Mit Hilfe dieser Anzeige kann eine Ausrichtung erfolgen, um einen optimalen Empfang sicherzustellen. Ferner kann eine Anzeigeeinrichtung für die Feldstärke des internen WLAN-Netzwerks vorhanden sein, um auch hier eine optimale Ausrichtung zu gewährleisten. Die Anzeige kann Balken aufweisen oder durch Zahlen bzw. Ziffern dargestellt werden.

In einer weiteren Ausführungsform registriert sich das Mobilfunknetzwerkmodul oder das Breitbanknetzwerkmodul automatisch über das lokale Netzwerk am Routermodul. Die Registrierung kann auf der Basis von Adressen insbesondere MAC-Adressen erfolgen, oder auf der Basis von Passwörtern und/oder Zertifikaten. Die Geräte scannen beim Starten und/oder auch während des Betriebs das lokale Netzwerk ab, um sich anhand spezifischer Kennungen zu finden. Danach erfolgt eine Registrierung auf der Basis eines Zugangsschutzes, wie Passwort, MAC-Adresse, Zertifikate etc.. Der Zugangsschutz kann auch weiterhin so ausgebildet sein, dass auf die einzelnen Module nur durch das Routermodul oder das Heimnetzwerkmodul zugegriffen werden kann. Es gibt somit eine Beschränkung des Zugriffs auf der Basis der Absenderadresse von Paketen. Somit kann ein Endgerät aus dem Heimnetzwerk nicht direkt auf jedes Modul zugreifen, sondern auf solche, die das logische Gateway darstellen.

Ferner weist das System einen zentralen Zugang zu einer Administrationsoberfläche auf, die über eine spezifische IP-Adresse angesprochen werden kann. Es kann sich hierbei auch um die Gateway Adresse handeln. Es wird durch einen Web-Server, der z.B. im Heimnetzwerkmodul integriert sein kann, oder auch in anderen Modulen, ein Web-Interface zur zentralen Konfiguration der einzelnen Module bereitgestellt. Die Änderungen werden dann an die Module weitergeleitet.

Somit kann das Breitbandnetzwerkmodul mit der IAD in den Räumlichkeiten direkt mit der Anschlussdose des Festnetz-Anschlusses ohne Installationsaufwand verbunden werden. Das Mobilnetzwerkmodul wird so positioniert, dass der optimale Antennenstandort gefunden werden kann. Er muss lediglich mit dem häuslichen Strom-Versorgungsnetz verbunden werden. Zwischen dem IAD und dem Mobilnetzwerkmodul besteht eine bidirektionale Datenverbindung. Die Technologie dieser bidirektionalen Datenverbindung ist so ausgeprägt, dass sie typische Entfernungen innerhalb von Räumen sicher und mit hoher Datenrate abdeckt.

Figuren
Figur 1 zeigt eine erste Ausführungsform bei dem die Module über ein erstes WLAN-Netzwerk verbunden sind;
Figur 2 zeigt eine zweite Ausführungsform bei dem die Module über ein zweites Stromkabel-Netzwerk (Powerlan) verbunden sind.

### Ausführungsform

Die Technologie der Datenübertragung wird im Folgenden anhand von zwei Ausprägungen beschrieben. Es gibt jedoch auch weitere, die hier nicht anhand eines Beispiels beschrieben werden.

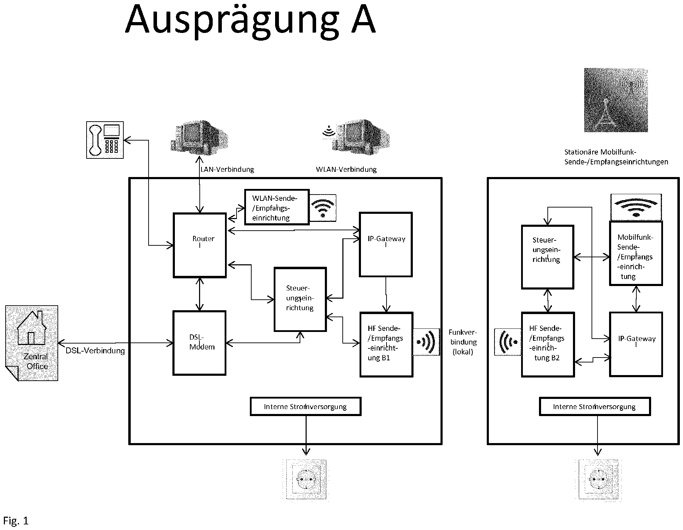

Die Fig. 1 zeigt eine Ausprägung bei der eine Datenübertragung via Funk erfolgt. Hier werden Funktechnologien eingesetzt, die eine hohe Datenübertragung in Räumlichkeiten ermöglichen (z.B. WLAN n; Standard IEEE 802.11). Dabei können in Räumlichkeiten 30m-50m überwunden werden.

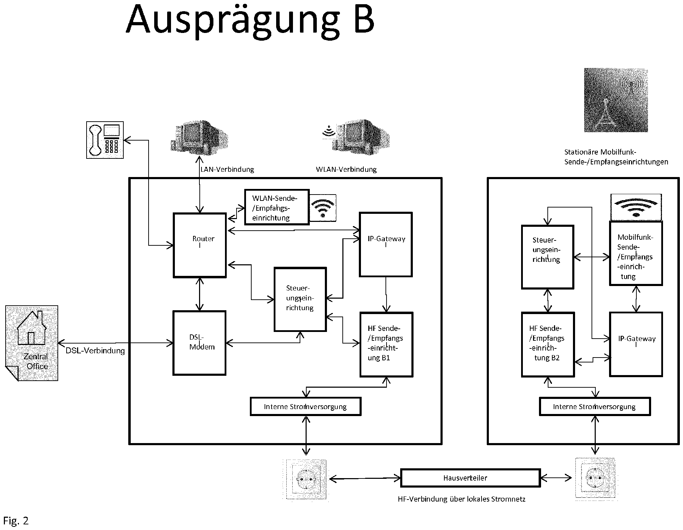

Die Fig. 2 zeigt eine Datenübertragung über Power LAN. *( Inhouse Power Une Communication ).* Hier wird das Stromnetz eines Hauses für die Datenübertragung mit hoher Bandbreite genutzt. Es kann über mehrere Etagen eine gute Datenverbindung erzielt werden.

Der IAD beinhaltet alle Einrichtungen, die ein herkömmlicher IAD aufweist (DSL-Modem, Router mit LAN- und WLAN-Funktionalität, Schnittstellen für Telefonie und PC). Zusätzlich besitzt der Router eine IP-Verbindung, die über die Sende-/Empfangseinrichtung B1 die IP-Verbindung über die Sende/Emfangseinrichtung B2 mit dem Mobilfunknetzmodul herstellt. Wie bereits erwähnt, kann bei den Kombi-Router der Nutzer des Routers einstellen, ob er Internet-Verbindungen wechselzeitig über DSL oder Mobilfunk oder gleichzeitig über beide Verbindungswege nutzen will .

Das Mobilfunknetzwerkmodul verfügt über eine HF-Empfangseinrichtung für die LTE-Verbindung, eine integrierte Antenne, einen SIM-Kartenleser, einen IP-Konverter, ein Modem C, eine Steuerungseinheit und optional eine Schnittstelle für eine externe Antenne. Weitere Bestandteile können optionale optische Anzeigeeinrichtungen für die Mobilfunk-Feldstärke und die Feldstärke der internen Datenverbindung und über den Betriebszustand der internen Datenverbindung sein.

Über die Steuereinrichtung des IAD lässt sich das Mobilfunknetzwerkmodul mit bekannten Sicherungsmechanismen am IAD anmelden, um einen Missbrauch zu verhindern.

## Patentansprüche

1. Integriertes Zugangsgerät, umfassend:
- ein Heimnetzwerkmodul, das eine Verbindung zu Endgeräten im lokalen Netzwerk bereitstellt, insbesondere über den Ethernet-Standard und/oder den WLAN-Standard;
- ein Breitbandnetzwerkmodul, das eine Verbindung zum Internet über ein Breitbandnetzwerk eines Telekommunikationsproviders bereitstellt, insbesondre über den DSL, ADSL, SDSL VDSL und/oder Kabel-Standard;
- ein Mobilfunknetzwerkmodul, das eine Verbindung zum Internet über ein Mobilfunknetzwerk eines Telekommunikationsproviders bereitstellt, insbesondere nach dem LTE, UMTS, GPRS, EDGE Standard;
- ein Routermodul, das den Datenverkehr von dem Heimnetzwerkmodul über das Mobilfunknetzwerk oder das Breitbandnetzwerk auf der Basis von Regeln routet;
wobei
das Mobilfunknetzwerkmodul und das Breitbandnetzwerkmodul räumlich getrennt in eigenständigen Gehäusen angeordnet sind, und über ein lokales Netzwerk miteinander verbunden sind,
**dadurch gekennzeichnet, dass** das
Routermodul so ausgebildet ist, dass das Mobilfunknetzwerkmodul und das Breitbandnetzwerkmodul für ein Endgerät im Heimnetzwerk als eine logische Einheit dargestellt werden, indem es durch Verwendung einer IP-Adresse adressierbar ist, wobei das integrierte Zugangsgerät so ausgebildet ist, dass es durch eine einzige IP-Adresse als IP-Gateway adressierbar ist; und wobei das Routermodul so ausgebildet ist, dass es durch einen Benutzer konfigurierbar ist, indem Regeln definierbar sind, ob Verbindungen in das Internet über das Mobilfunknetzwerkmodul oder das Breitbandnetzwerkmodul wechselzeitig, parallel, oder aufgrund spezifischer Dateneigenschaften erfolgen sollen.

2. Integriertes Zugangsgerät, nach dem vorhergehenden Anspruch, wobei sowohl das Mobilfunknetzwerkmodul als auch das Breitbandnetzwerkmodul über eine Netzwerkadresse adressierbar sind, und das Routermodul so ausgebildet ist, dass es auf der Basis von Regeln die Daten über das Mobilfunknetzwerkmodul und/oder Breitbandnetzwerkmodul in die entsprechenden Netze weiterleitet, so dass das Endgerät im Heimnetzwerk lediglich ein Gateway adressiert, wenn Daten aus dem Heimnetzwerk versendet werden sollen.

3. Integriertes Zugangsgerät nach einem oder mehreren der vorhergehenden Ansprüche, wobei das Routermodul so ausgebildet ist, dass es Daten vom Heimnetzwerk auf der Basis von Regeln über das lokale Netzwerk zum Mobilfunknetzwerkmodul routet, wobei das lokale Netzwerk Powerlan, Ethernet, WLAN und/oder Bluetooth ist.

4. Integriertes Zugangsgerät nach einem oder mehreren der vorhergehenden Ansprüche, wobei das Mobilfunknetzwerkmodul und das Breitbandnetzwerkmodul eigenständige Stromversorgungen aufweisen, vorzugsweise auch Power over ethernet bereitstellen oder für die Stromversorgung nutzen.

5. Integriertes Zugangsgerät nach einem oder mehreren der vorhergehenden Ansprüche, wobei das Routermodul und das Heimnetzwerkmodul zusammen im Gehäuse des Breitbandnetzwerkmoduls oder im Gehäuse des Mobilfunknetzwerkmoduls angeordnet sind.

6. Integriertes Zugangsgerät nach einem oder mehreren der vorhergehenden Ansprüche, wobei das Breitbandnetzwerkmodul und/oder Mobilfunknetzwerkmodul IP-Paket-Konverter aufweisen, um die IP-Pakete aus dem Heimnetzwerk für das Mobilfunknetzwerk und/oder Breitbanknetzwerk zu konvertieren.

7. Integriertes Zugangsgerät nach einem oder mehreren der vorhergehenden Ansprüche, wobei das Mobilfunknetzwerkmodul eine HF-Antenne und ein integriertes HF-Empfangs-/Sendeteil aufweist, wobei die HF-Antenne integriert ist oder über eine Schnittstelle für eine externe Antenne angesprochen wird.

8. Integriertes Zugangsgerät nach einem oder mehreren der vorhergehenden Ansprüche, umfassend Schnittstellen für Telefonie, insbesondere ISDN und/oder Analoge Schnittstellen und/oder USB- für die Verbindung mit einem PC oder zum Anschluss von Speichermedien.

9. Integriertes Zugangsgerät nach einem oder mehreren der vorhergehenden Ansprüche, wobei das Mobilfunknetzwerkmodul einen SIM-Kartenleser, ein Modem C und/oder eine Steuerungseinheit umfasst.

10. Integriertes Zugangsgerät nach einem oder mehreren der vorhergehenden Ansprüche, wobei das Mobilfunknetzwerkmodul eine optische Anzeigeeinrichtungen für ein Mobilfunknetzwerk-Feldstärke und/oder die Anzeigeeinrichtung für die Feldstärke des internen Netzwerk hat.

11. Integriertes Zugangsgerät nach einem oder mehreren der vorhergehenden Ansprüche, wobei sich das Mobilfunknetzwerkmodul oder das Breitbanknetzwerkmodul so ausgebildet sind, dass sie sich automatisch über das lokale Netzwerk am Routermodul registrieren, und vorzugsweise einen Zugangsschutz für die Registrierung aufweisen.

## Claims

1. An integrated access device , comprising:
- a home network module providing connections to terminal devices in a local home network in particular via a Ethernet standard and/or a WLAN standard;
- a broadband network module providing a connection to the internet via a broadband network of a telecommunication network provider, in particular according to the DSL ,ADSL, SDSL, VDSL , and/or cable standard;
- a mobile network module providing a connection to the internet via a mobile network of a telecommunication network provider, in particular according to the LTE , UMTS , GPRS , EDGE standard;
- a router module routing the data traffic from the home network via the mobile network or via the broadband network according to rules; wherein
- the mobile network module and the broadband network module are arranged spatially separated in independent housings, and are connected with each other via a local network,
**characterized in that**
the router module is arranged for the mobile network module and the broadband network module to be represented as a logical unit by being addressable via using an IP address, wherein the integrated access device is arranged to be addressable by one single IP address as IP Gateway; and wherein
the router module is arranged to be configured by a user by defining rules of whether connections to the internet are established via the mobile network module or the broadband network module at alternating times, in parallel, or because of specific data properties.

2. An integrated access device according to the previous claim, wherein both the mobile network module and the broadband network module are addressable via a network address and the router module is arranged to transmit data based on rules via the mobile network module and/or the broadband network module into the relevant networks, such that the home network only addresses a gateway if data is sent from the home network.

3. An integrated access device according to one or more of the previous claims, wherein the router module is arranged to route data from the home network on the basis of rules via the local network to the mobile network module, wherein the local network is a Powerlan, Ethernet, WLAN and/or Bluetooth.

4. An integrated access device according to one or more of the previous claims, wherein the mobile network module and the broadband network module have independent power supplies, and preferably also provide power over Ethernet or use the same as a power supply.

5. An integrated access device according to one or more of the previous claims, wherein the router module and the home network module are arranged together in the housing of the broadband network module or in the housing of the mobile network module.

6. An integrated access device according to one or more of the previous claims, wherein the broadband network module and/or the mobile network module comprise IP packet converters for converting IP packets from the home network for the mobile network and/or broadband network.

7. An integrated access device according to one or more of the previous claims, wherein the mobile network module comprises a HF Antenna and an integrated HF receive/send module, wherein the HF Antenna is integral or addressed via an external interface for an external antenna.

8. An integrated access device according to one or more of the previous claims, comprising interfaces for telephony, in particular ISDN and/or analogous interfaces and/or USB for connecting to a PC or to storage media.

9. An integrated access device according to one or more of the previous claims, wherein the mobile network module comprises a SIM card reader, a Modem and/or a control unit.

10. An integrated access device according to one or more of the previous claims, wherein the mobile network module comprises an optical display unit for a mobile network field strength and/or an display unit for the field strength of the internal network.

11. An integrated access device according to one or more of the previous claims, wherein the mobile network module or the broadband network module are arranged to automatically register at the router module via the local network, and preferably comprise an access protection for registration.

## Revendications

1. Un dispositif d'accès intégré, comprenant :
- un module de réseau domestique, qui fournit des connexions à des dispositifs terminaux sur un réseau domestique local, en particulier conforme au standard Ethernet et/ou au standard WLAN
- un module de réseau à large bande, qui fournit une connexion à Internet via un réseau à large bande d'un fournisseur de télécommunications, en particulier conforme à DSL, ADSL, SDSL VDSL et / ou par le standard du cable ;
- un module de réseau mobile, qui fournit une connexion à Internet via un réseau cellulaire d'un opérateur de télécommunications, en particulier conforme au standard LTE, UMTS, GPRS, EDGE ;
- un module de routage pour le routage du trafic de données du réseau domestique vers le réseau mobile ou le réseau à large bande en fonction de règles,
**caractérisé en ce que**
le module de routage est disposé de façon à ce que le module de réseau mobile et le module de réseau à large bande soient représentés en tant qu'une unité logique pouvant être adressée via une adresse IP, dans lequel le dispositif d'accès intégré est disposé pour être adressable via une seule adresse IP en tant que passerelle de sortie IP ; et dans lequel
le module de routage est disposé pour être configuré par un utilisateur en définissant des règles déterminant si des connexions au réseau Internet sont établies, alternativement, via le module de réseau mobile ou le module de réseau large bande, en parallèle, ou en fonction de propriétés de données spécifiques.

2. Un dispositif d'accès intégré selon la revendication précédente, dans lequel à la fois le module de réseau mobile et le module de réseau à large bande peuvent être adressées via une adresse de réseau et le module de routage est disposé de manière à transmettre des données via le module de réseau mobile et/ou le module de réseau à large bande sur la base de règles, de telle façon que le réseau domestique n'adresse qu'une seule passerelle de sortie lorsque des données doivent être transmises à partir du réseau domestique.

3. Un dispositif d'accès intégré selon l'une ou plusieurs des revendications précédentes, dans lequel le module de routage est disposé pour router, sur la base de règles, des données du réseau domestique vers le réseau local puis le module de réseau mobile, dans lequel le réseau local est un Powerlan, Ethernet, WLAN et/ou Bluetooth.

4. Un dispositif d'accès intégré selon l'une ou plusieurs des revendications précédentes, dans lequel le module de réseau de téléphonie mobile et le module de réseau à large bande disposent d'alimentation séparées, et de préférence fournissent également du courant électrique via PoE ou utilise le même en tant que source d'énergie.

5. Un dispositif d'accès intégré selon l'une ou plusieurs des revendications précédentes, dans lequel le module de routage et le module de réseau local sont disposées conjointement dans le boîtier du module de réseau à large bande ou dans le boîtier du module de réseau de radiocommunication mobile.

6. Un dispositif d'accès intégré selon l'une ou plusieurs des revendications précédentes, dans lequel le module de réseau à large bande et / ou le module de réseau mobile comporte des convertisseurs de paquets IP pour la conversion de paquets IP depuis le réseau domestique pour le réseau mobile et/ou le réseau à large bande.

7. Un dispositif d'accès intégré selon l'une ou plusieurs des revendications précédentes, dans lequel le module de réseau de radiotéléphonie mobile comprend une antenne HF et un module d'émission/réception HF intégré, dans lequel l'antenne HF est intégrée ou adressée via une interface externe pour antenne externe.

8. Un dispositif d'accès intégré selon l'une ou plusieurs des revendications précédentes, comprenant des interfaces pour la téléphonie, en particulier les interfaces RNIS et / ou analogiques et / ou USB pour la connexion à un PC ou à un périphérique de stockage.

9. Un dispositif d'accès intégré selon l'une ou plusieurs des revendications précédentes, dans lequel le module de réseau mobile comprend un lecteur de carte SIM, d'un modem et/ou une unité de commande.

10. Un dispositif d'accès intégré selon l'une ou plusieurs des revendications précédentes, dans lequel le module de réseau mobile dispose d'une unité d'affichage optique pour l'intensité du champ de réseau mobile et/ou une unité d'affichage pour l'intensité de champ du réseau interne.

11. Un dispositif d'accès intégré selon l'une ou plusieurs des revendications précédentes, dans lequel le module de réseau mobile ou le module de réseau à large bande sont disposés pour un enregistrement automatique au niveau du module de routage via le réseau local, et de préférence comporte une protection d'accès à l'enregistrement.
